# EUROPÄISCHE PATENTSCHRIFT

(11) **EP 2 236 327 B1**
(45) Veröffentlichungstag und Bekanntmachung des Hinweises auf die Patenterteilung: **28.11.2012**
(21) Anmeldenummer: 10157355.8
(22) Anmeldetag: 23.03.2010
(51) Int. Cl.: B60H 1/00, B60H 1/32, F24F 13/22

(54) **Klimaanlage**
Air conditioning device
Installation de climatisation

(30) Priorität: 18.09.2009 DE 102009041793; 31.03.2009 DE 102009015100
(43) Veröffentlichungstag der Anmeldung: 06.10.2010
(73) Patentinhaber: Behr GmbH & Co. KG, 70469 Stuttgart (DE)
(72) Erfinder: Heilemann, Jürgen, 73240 Wendlingen (DE); Bouchalat, Karim-Mathieu, 70499 Stuttgart (DE); Komowski, Michael, 71263 Weil der Stadt (DE)
(74) Vertreter: Grauel, Andreas

(56) Entgegenhaltungen:
- EP-A2- 1 674 310
- DE-A1- 3 023 236
- JP-A- 2008 013 117

## Beschreibung

Die Erfindung betrifft eine Klimaanlage, insbesondere für ein Kraftfahrzeug, gemäß dem Oberbegriff des Anspruchs 1.

Klimaanlagen werden in Kraftfahrzeugen eingesetzt, um den Fahrzeuginnenraum auf eine für die Fahrzeuginsassen angenehme Temperatur zu bringen bzw. diese zu halten. Um zu vermeiden, dass ein in den Fahrzeuginnenraum eingeleiteter Frischluftstrom Feuchtigkeit enthält bzw. um auch bestimmte Bauteile der Klimaanlage vor Feuchtigkeit zu schützen, sind Wasserabscheidungseinrichtungen notwendig.

In aus dem Stand der Technik bekannten Klimaanlagen wird aus der Frischluft abgeschiedenes Wasser von einem Frischluft-Ansaugabschnitt zu einem Filtertrakt bzw. einem Gebläse-Filter-Abschnitt geleitet. Dies kann bei laufendem Lüftungsrad des Gebläses in dem Gebläse-Filter-Abschnitt an den elektrischen Bauteilen der Klimaanlage zu einem durch das Wasser verursachten Kurzschluss führen.

Die DE 30 23 236 A1 offenbart als nächster Stand der Technik eine Klimaanlage für ein Kraftfahrzeug, welche einen Gebläsefilterabschnitt und einen Ansaugabschnitt mit einem Ansauggehäuse aufweist und ferner einen Verteilerkasten mit zumindest einem Kondenswasserabablauf, wobei im Ansaugabschnitt abgeschiedenes Wasser über eine erste Wasserabflusseinrichtung und/oder im Gebläsefilterabschnitt abgeschiedenes Wasser über eine zweite Wasserabflusseinrichtung zu dem den zumindest einen Kondenswasserablauf aufweisenden Verteilerkasten ableitbar ist.

Um dieses Problem zu überwinden, wurden in den Weiterentwicklungen derartiger Anordnungen Führungen der Wasserwege beispielsweise in im Filterdeckel angeordneten Rinnen oder doppelte Böden unterhalb des Geblä-se-Filter-Abschnitts zum Sammeln und Abführen des Wassers vorgesehen. Der Filterdeckel ist jedoch ein ausbaubares Serviceteil, welches gleichzeitig eine zum Filtertrakt wasserdichte Verbindung gewährleisten muss.

Daher ist es die Aufgabe der vorliegenden Erfindung, eine Klimaanlage für ein Kraftfahrzeug zur Verfügung zu stellen, bei welcher ein Kurzschluss durch aus dem Filtertrakt angesaugtes Wasser vermieden wird, und bei welcher gleichzeitig eine hohe Dichtigkeit im Bereich des Filtertrakts erzielt wird.

Die Aufgabe der vorliegenden Erfindung wird durch eine Klimaanlage mit den Merkmalen gemäß Anspruch 1 gelöst, Vorteilhafte Weiterbildungen der vorliegenden Erfindung sind in den Unteransprüchen definiert.

Erfindungsgemäß wird eine Klimaanlage, insbesondere für ein Kraftfahrzeug, bereitgestellt, welche einen Gebläse-Filter-Abschnitt mit zumindest einem Gebläsetrakt und einem Filtertrakt, einen Ansaugabschnitt mit einem Ansauggehäuse, welches zumindest eine Frischluftöffnung aufweist, durch welche Frischluft angesaugt wird, und einen Verteilerkasten mit zumindest einem Kondenswasserablauf aufweist, wobei im Ansaugabschnitt abgeschiedenes Wasser und/oder im Gebläse-Filter-Abschnitt abgeschiedenes Wasser über getrennte Wasserabflusseinrichtungen zu dem den zumindest einen Kondenswasserablauf aufweisenden Verteilerkasten ableitbar ist. Das durch die erfindungsgemäße Konfiguration erzielte getrennte Wassermanagement vom Ansauggehäuse und dem Gebläse-Filter-Abschnitt bis hin zum Verteilerkasten mit dem zumindest einen Kondenswasserablauf verhindert effektiv ein Ansaugen von Wasser aus dem Bereich des Filtertrakts, wodurch ein durch Wasser möglicherweise verursachter Kurzschluss an elektrischen Bauteilen der Klimaanlage verhindert wird. Darüber hinaus wird durch die Trennung der Wasserwege vom ersten Moment an, d. h. die Führung des Ansaugwassers vor dem Gebläse separat von dem Bereich des Gebläse-Filter-Abschnitts bis zu einem Anschluss an den Verteilerkasten, welcher in dem Bereich des Kondenswasserablaufs des Verteilerkastens und nach einem Verdampfer der Klimaanlage angeordnet ist, eine besonders wasserdichte und servicefreundliche Lösung vorgesehen, die eine Wasserundichtigkeit im Bereich des Filtertrakts ausschließt.

Erfindungsgemäß ist an dem Ansauggehäuse unterhalb der Frischluftöffnung eine Wasserkaskade vorgesehen, welche aus einer Anordnung aus zumindest einem lamellenförmigen Element, insbesondere aus einer Vielzahl von im Wesentlichen parallel zueinander angeordneten und jeweilig schräggestellten lammelenförmigen Elementen besteht. Hierdurch werden effektiv eine sichere Wasserabführung des aus dem Frischluftbereich kommenden und an einer Frischluftklappe leckenden Wassers erzielt und eine Wasserundichtheit bzw. ein Wasseraustritt im Bereich der Umfuftöffnung verhindert. Insbesondere wird Wasser durch diese Konfiguration sicher zu einer ersten Wasserabflusseinrichtung transportiert und gleichzeitig werden die Umluftöffnung und damit verbundene Umluftöffnungsquerschnitte nicht eingeschränkt. Dank der Wasserkaskade, die sicher Wasser aus der Frischluftöffung nach unten zu der ersten Wasserabflusseinrichtung führt, kann verhindert werden, dass das Wasser im Bereich unterhalb der Frischluftöffnung zum Fahrzeuginnenraum austreten kann.

Vorzugsweise ist an dem Ansaugabschnitt eine erste Wasserabflusseinrichtung vorgesehen, über welche das am Ansaugabschnitt abgeschiedene Wasser zu dem Verteilerkasten ableitbar ist.

Gemäß einer weiteren bevorzugten Ausführungsform ist die erste Wasserabflusseinrichtung mit einem wannenartigen Wasserauffangabschnitt versehen, welcher dazu dient, in dem Ansaugabschnitt abgeschiedenes Wasser zu sammeln.

Gemäß noch einer weiteren bevorzugten Ausführungsform ist die erste Wasserabflusseinrichtung mit einem rohrartigen Wasserableitabschnitt versehen, welcher mit dem Wasserauffangabschrnitt verbunden ist und dazu dient, das in dem Ansaugabschnitt abgeschiedene Wasser zu dem den zumindest einen Kondenswasserablauf aufweisenden Verteilerkasten abzuleiten.

Noch bevorzugter ist es, wenn die erste Wasserabflusseinrichtung einstückig und als separates Bauteil hergestellt ist. Die einstückige Herstellung ohne jegliche Trennfugen gewährleistet die hundertprozentige Wasserdichtigkeit der ersten Wasserabflusseinrichtung. Die Herstellung als separates Bauteil ist darüber hinaus für den Servicefall, wenn beispielsweise Sand oder diverse andere Schmutzpartikel, welche sich im Laufe der Zeit in der ersten Wasserabflusseinrichtung ablagern, daraus entfernt werden müssen, besonders geeignet.

Besonders bevorzugt ist die erste Wasserabflusseinrichtung als Blasteil im Blasverfahren hergestellt.

Es ist auch bevorzugt, wenn die erste Wasserabflusseinrichtung Verbindungselemente aufweist, mittels welcher sie an dem Ansaugabschnitt und/oder an dem Gebläse-Filter-Abschnitt anbringbar ist. Eine bevorzugte Verbindung kann dabei in Form einer Aufhängung, einer Verclipsung, etc. vorgesehen sein.

Gemäß einer weiteren bevorzugten Ausführungsform ist an einem Ende des Wasserableitabschnitts ein Verbindungselement vorgesehen.

Vorzugsweise sind das Verbindungselement und der Verteilerkasten über eine Steckverbindung miteinander dichtend, insbesondere wasserdicht, verbindbar. Durch die wasserdichte Verbindung der ersten Wasserabflusseinrichtung mit dem Verteilerkasten kann das gesammelte Wasser sicher durch diesen an dem zumindest einen Kondenswasserablauf aus der Klimaanlage abgeleitet werden, ohne dabei in andere Bereiche der Klimaanlage zu gelangen.

Es ist auch bevorzugt, wenn an dem Verteilerkasten ein elastisches Ringelement vorgesehen ist, in welches das Verbindungselement einsteckbar ist.

Gemäß noch einer weiteren bevorzugten Ausführungsform ist das elastische Ringelement ein Zwischenring, welcher aus EPDM oder Gummi hergestellt ist. Dies bietet eine besonders einfache und kostengünstige Dichtungslösung.

Besonders bevorzugt weist das elastische Ringelement eine Rückschlagventilfunktion auf. Durch Vorsehen des elastischen Zwischenrings mit Rückschlagventilfunktion wird einerseits die Wasserdichtigkeit gewährleistet, andererseits wird vorteilhafterweise der Rückfluss der Luft vom Verteilerkasten zum Bereich des Ansaugabschnitts, welcher auch ein Ansaugen der im Fahrzeuginnenraum vorhandenen Umluft vorsieht, verhindert.

Vorteilhaft ist darüber hinaus, wenn die erste Wasserableiteinrichtung in zumindest einem Abschnitt aus einem transparenten Material hergestellt ist. Dies bietet den Vorteil, dass eine Prüfung einer möglichen Verschmutzung der ersten Wasserableiteinrichtung erheblich vereinfacht wird, denn es ist eine einfache optische Prüfung ohne Demontage der ersten Wasserableiteinrichtung möglich.

Gemäß einer weiteren bevorzugten Ausführungsform weist das Ansauggehäuse zumindest eine Umluftöffnung auf.

Vorzugsweise weist jedes der lamellenförmigen Elemente einen Neigungswinkel zu der Horizontalen auf, der größer als 20° ist.

Noch bevorzugter ist es, wenn jedes der kaskadenförmig angeordneten lamellenförmigen Elemente an einem höchsten Punkt, insbesondere an einem jeweiligen äußeren Endabschnitt, mit einer Wölbung bzw. Erhöhung ausgebildet ist, wodurch die Wasserabführung zu der ersten Wasserabflußeinrichtung noch weiter verbessert bzw. ein Wasseraustritt im Bereich der Umluftöffnung noch sicherer verhindert werden.

Es ist darüber hinaus besonders bevorzugt, wenn die lamellenförmigen Elemente V-förmig angeordnet sind, wobei jedes lamellenförmige Element hinsichtlich einer Mittelachse eine Neigung von größer als 20° aufweist.

Gemäß noch einer weiteren bevorzugten Ausführungsform ist jedes der lamellenförmigen Elemente mit zumindest einer Vertiefung in Form einer Abflussrinne ausgebildet, welche das Ableiten des aufgefangenen Wassers zu der ersten Wasserabflusseinrichtung noch weiter verbessert. Durch die Abflussrinnen kann das aufgefangene Wasser vordefiniert geführt werden und gleichzeitig wird hierdurch eine Versteifung der Gesamtkonstruktion erzielt.

Vorzugsweise können zur Verstärkung und Versteifung des Ansauggehäuses die lamellenförmigen Elemente darüber hinaus mit Querrippen in das Ansauggehäuse integriert sein.

Durch Vorsehen der Wasserkaskade, welche die lamellenförmigen Elemente aufweist, in der Umluftöffnung ist es möglich, eine vertikale Gebläse-Motorposition ("liegende Welle") zu realisierten. Die vertikale Gebläse-Motorposition führt im Bauraum zu einer seitigen Anordnung der Frischluftöffnung und der Umluftöffnung übereinander. Ohne die Wasserkaskade würde die vertikale Position des Gebläsemotors somit im Bereich der Frischluftansaugung zu einer Wasseransammlung im Bereich des Motorhalters und somit zu einer vorzeitigen Abnutzung aufgrund von Korrosion etc. des Motors führen. Durch Vorsehen der Wasserkaskade und der Wasserabflusseinrichtungen wird Wasser effektiv vor dem Gebläsetrakt gesammelt und aus der Klimaanlage abgeführt, was den Motor vor Korrosion schützt und seine Lebensdauer verlängert.

Gemäß einer weiteren bevorzugten Ausführungsform ist in dem Filtertrakt des Gebläse-Filter-Abschnitts ein Trennelement vorgesehen, welches zusammen mit einer Vertiefung im Boden des Gehäuseteils des Filtertrakts einen Innenabflußkanal zum Abführen von Wasser und ungefilterter Luft aus dem Filtertrakt zu einem Kondenswasserablauf bildet. Bei bekannten Lösungen werden im Filterwechsel-Service demontierbare Bestandteile der Wasserabscheidung verwendet, da zum Ausbauen eines Filters sowohl der Verbindungsschlauch als auch der Filterdeckel selbst ausgebaut werden müssen. Im eingebauten Zustand müssen alle Trennungen zwischen den einzelnen Elementen wasserdicht sein. Diese Ausführungsform hat in dieser Hinsicht den Vorteil, dass eine Wasserabscheidung in der Klimaanlage vorgesehen wird, bei welcher im Servicefall, z.B. beim Filterwechsel-Service, kein Ausbau der Wasserabscheidungselemente notwendig ist. Die Wasserführung weist vorzugsweise darüber hinaus auch keine Trennungsfugen nach außen auf, so dass Wasserundichtheit in der Region der Wasserabscheidung nicht möglich ist. Die Funktion der Wasserabscheidung hinter dem Gebläsetrakt des Filter-Gebläse-Abschnitts ist somit vom Filterservice und damit vom Ausbau der betroffenen Teile getrennt.

Im Folgenden wird die Erfindung anhand eines Ausführungsbeispiels unter Bezugnahme auf die Zeichnung detailliert erläutert. In der Zeichnung zeigen:
- Fig. 1: perspektivische Ansicht eines Ansaugabschnitts und eines Gebläse- Filter-Abschnitts einer Klimaanlage gemäß einer Ausführungsform;
- Fig. 2: eine weitere perspektivische Ansicht des in Fig. 1 gezeigten An- saugabschnitts und Gebläse-Filter-Abschnitts;
- Fig. 3: eine weitere perspektivische teilweise geschnittene Ansicht des in Fig. 1 gezeigten Ansaugabschnitts und Gebläse-Filter-Abschnitts;
- Fig. 4: eine perspektivische Ansicht des Gebläse-Filter-Abschnitts;
- Fig. 5: eine Klimaanlage gemäß einer Ausführungsform;
- Fig. 6A, 6B: jeweilige perspektivische Ansichten der ersten Wasserabfluss- einrichtung;
- Fig. 7: eine perspektivische Ansicht eines Ansauggehäuses mit daran mon- tierter erster Wasserabflusseinrichtung;
- Fig. 8: eine Draufsicht auf einen Abschnitt einer Klimaanlage im Bereich des Gebläse-Filter-Abschnitts gemäß einer weiteren Ausführungs- form;
- Fig. 9: eine perspektivische Ansicht von oben auf den Gebläse-Filter- Abschnitt gemäß der in Fig. 8 dargestellten Ausführungsform;
- Fig. 10a, 10b: weitere jeweils perspektivische Ansichten der in Fig. 8 darges- tellten Ausführungsform;
- Fig. 11: eine schematische Darstellung der Luftführung durch einen Gebläse- Filter-Abschnitt;
- Fig. 12: eine weitere schematische Darstellung der Luftführung durch einen Gebläse-Filter-Abschnitt;
- Fig. 13: eine Schnittansicht eines Ansaugabschnitts und eines Gebläsetrakts gemäß einer weiteren Ausführungsform;
- Fig. 14: eine weitere Schnittansicht des in Fig. 13 dargestellten Ansaugab- schnitts mit Stauluftregelung;
- Fig. 15: eine Schnittansicht eines Ansaugabschnitts und eines Gebläsetrakts eines Gebläse-Filter-Abschnitts gemäß einer weiteren Ausführungs- form;
- Fig. 16: eine perspektivische Ansicht eines Ansaugabschnitts und eines Ge- bläsetrakts eines Gebläse-Filter-Abschnitts gemäß einer weiteren Ausführungsform; und
- Fig. 17: eine Detailansicht einer Umluftöffnung mit einer Wasserkaskade gemäß einer weiteren Ausführungsform.

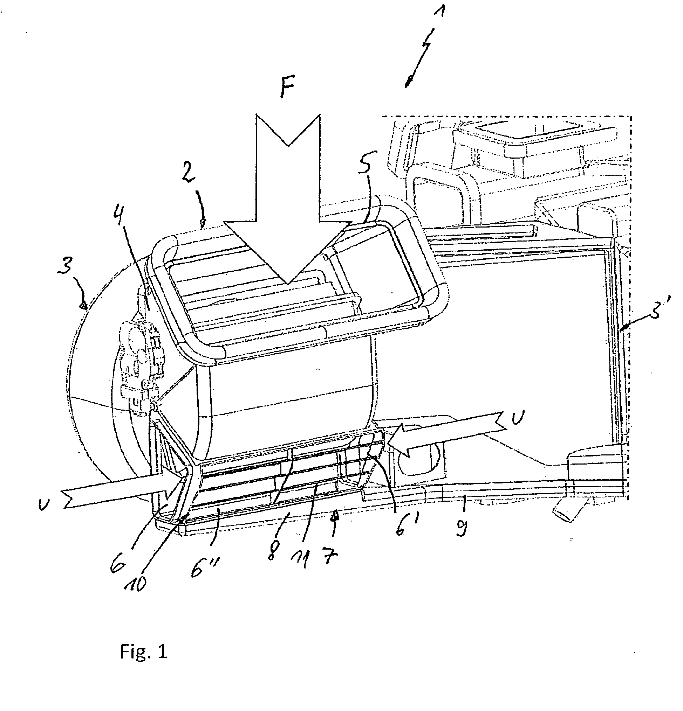

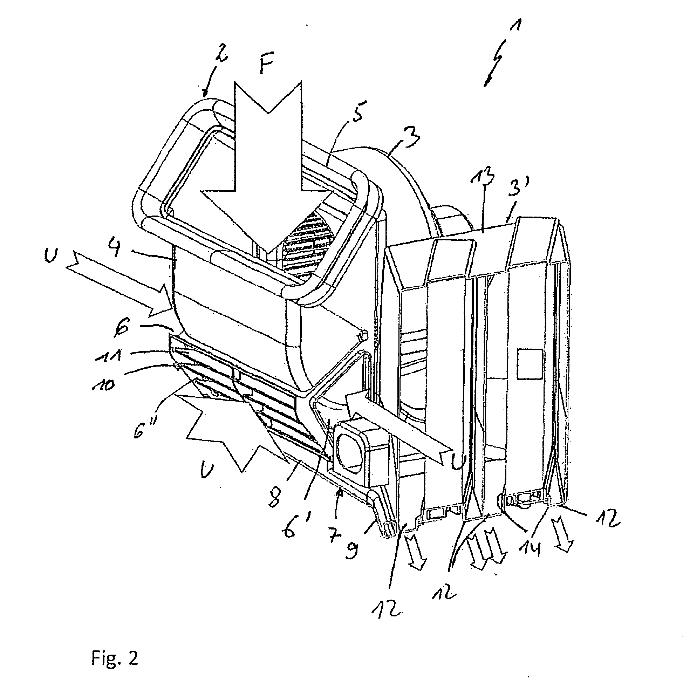

Fig. 1 zeigt eine perspektivische Ansicht eines Ansaugabschnitts 2 und eines Gebläse-Filter-Abschnitts 3, 3' einer Klimaanlage 1 gemäß einer Ausführungsform. Durch einen senkrechten Pfeil schematisch dargestellt ist die allgemeine Strömungsrichtung eines durch den Ansaugabschnitt 2 angesaugten Frischluftstroms F, welcher an der in einem Ansauggehäuse 4 des Ansaugabschnitts 2 vorgesehenen Frischluftöffnung 5 in die Klimaanlage 1 eintritt. Im Wesentlichen gegenüberliegend der Frischluftöffnung 5 sind darüber hinaus Umluftöffnungen 6, 6', 6" in dem Ansauggehäuse 4 vorgesehen, durch welche ein Umluftstrom U aus der Fahrzeuginnenkabine in die Klimaanlage 1 einleitbar ist. Unterhalb der Umluftöffnungen 6, 6', 6" ist eine erste Wasserabflusseinrichtung 7 angeordnet, welche einen wannenartigen Wasserauffangabschnitt 8 aufweist, in welchem das am Ansaugabschnitt 2 aus dem Frischluftstrom F oder dem Umluftstrom U abgeschiedene Wasser aufgefangen wird, und über einen sich an den wannenartigen Wasserauffangabschnitt 8 anschließenden rohrförmigen Wasserableitabschnitt 9 zu dem Verteilerkasten (nicht dargestellt) weitergeleitet wird. Weiterhin ist in Fig. 1 der einen Gebläsetrakt 3 und einen Filtertrakt 3' aufweisende Gebläse-Filter-Abschnitt 3, 3' dargestellt, welcher mit dem Ansaugabschnitt 2 verbunden ist. Das in dem Gebläse-Filter-Abschnitt 3, 3' abgeschiedene Wasser wird jedoch, wie weiter unten in Zusammenhang mit Fig. 2 beschrieben wird, getrennt von dem in dem Ansaugabschnitt 2 abgeschiedenen Wasser gesammelt und getrennt davon bis zu dem Verteilerkasten (nicht dargestellt) geleitet. Um eine vollständige Trennung des aus dem Ansaugabschnitt 2 abgeschiedenen Wassers und des aus dem Gebläse-Filter-Abschnitt 3, 3' abgeschiedenen Wassers zu erzielen, ist an dem Ansauggehäuse 4 in dem Bereich der Umluftöffnung 6" eine sogenannte Wasserkaskade 10 angeordnet, welche aus einer Vielzahl von parallel angeordneten, schräggestellten lamellenförmigen Elementen 11 die zum Auffangen und Ableiten des abgeschiedenen Wassers in Richtung zu der ersten Wasserabflusseinrichtung 7 dienen.

Fig. 2 zeigt eine weitere perspektivische Ansicht des in Fig. 1 gezeigten Ansaugabschnitts 2 und Gebläse-Filter-Abschnitts 3, 3'. Wie in Fig. 2 erkennbar ist, sind zweite Wasserabflusseinrichtungen 12 an einem Gehäuse 13 des Filtertrakts 3' vorgesehen bzw. daran angeformt, durch welche in dem Gebläse-Filter-Abschnitt 3, 3' abgeschiedenes und gesammeltes Wasser getrennt von dem in dem Ansaugabschnitt 2 abgeschiedenen und gesammelten Wasser zu dem Verteilerkasten (nicht dargestellt) abgeführt wird. Kanalartige Abschnitte 14 der zweiten Wasserabflusseinrichtungen 12 erstrecken sich schräg nach unten von dem Gehäuse 13 des Filtertrakts 3', so dass das angesammelte Wasser leicht nach unten abfließen kann, wie durch die Pfeile angedeutet ist.

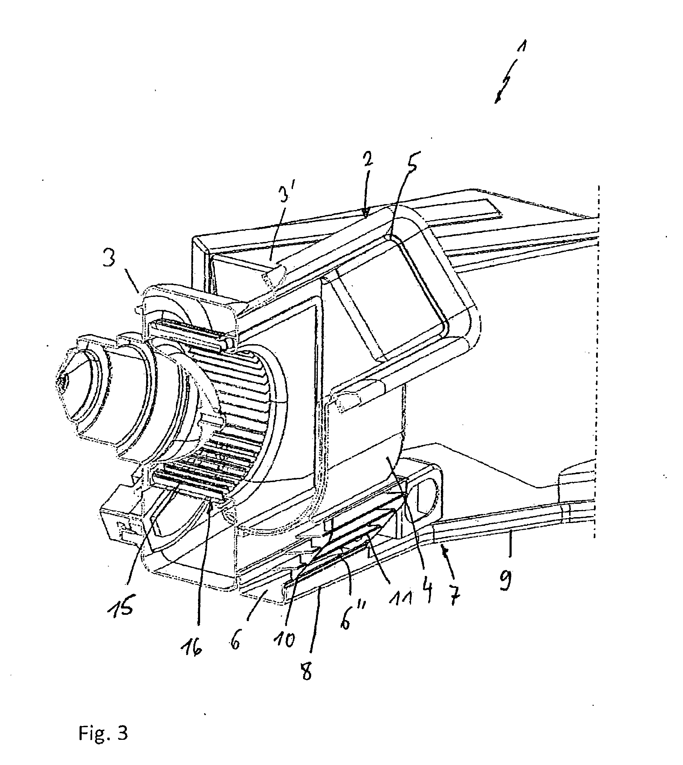

Fig. 3 zeigt eine weitere perspektivische teilweise geschnittene Ansicht des in Fig. 1 gezeigten Ansaugabschnitts 2 und Gebläse-Filter-Abschnitts 3, 3'. In dieser Figur ist der Gebläsetrakts 3 mit abgenommenen Gehäuse dargestellt, so dass ein mit einer Vielzahl von Lamellen 15 versehenes und beispielsweise elektrisch betriebenes Lüfterrad 16 sichtbar ist, durch welches eine durch die Frischluftöffnung 5 oder die Umluftöffnungen 6, 6', 6" angesaugte Luftströmung an den Filtertrakt 3' weitergeleitet wird. Durch die erfindungsgemäße Konfiguration der getrennten Wasserführungen bezüglich des Ansaugabschnitts 2 und des Gebläse-Filter-Trakts 3, 3' kann Wasser, welches in dem Ansaugabschnitt 2 abgeschieden wird, nicht durch das Lüfterrad 16 angesaugt werden und beispielsweise an den Filtertrakt 3' weitergeleitet werden, da es bereits durch die erste Wasserabflusseinrichtung 7 entfernt worden ist.

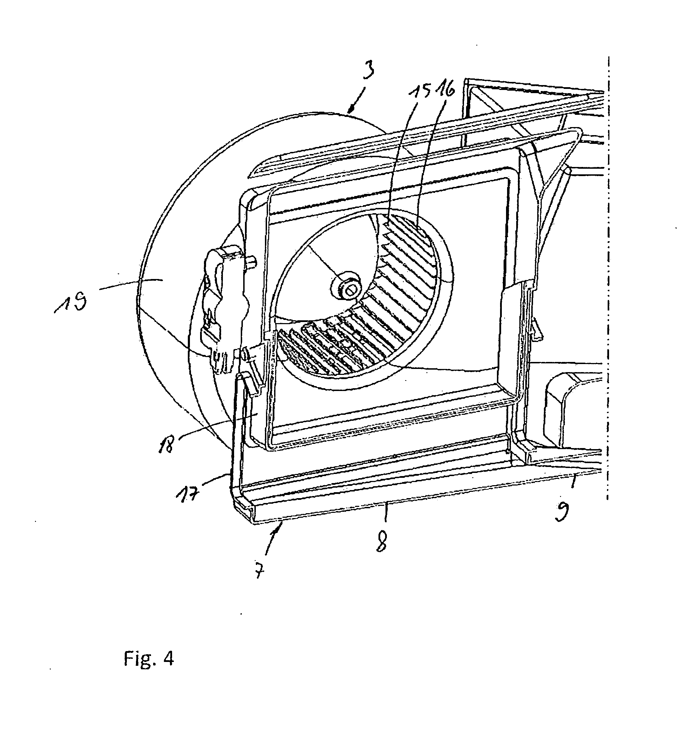

Fig. 4 zeigt eine weitere perspektivische Ansicht des Gebläse-Filter-Abschnitts 3, 3'. An einem Rahmen 18, an welchem auch das Lüfterrad 16 mit einem Lüftergehäuse 19 befestigt sind, ist die erste Wasserabflusseinrichtung 7 über eine Aufhängung 17 daran befestigt. Auch das Ansauggehäuse (nicht dargestellt) kann an dem Rahmen 18 montiert werden.

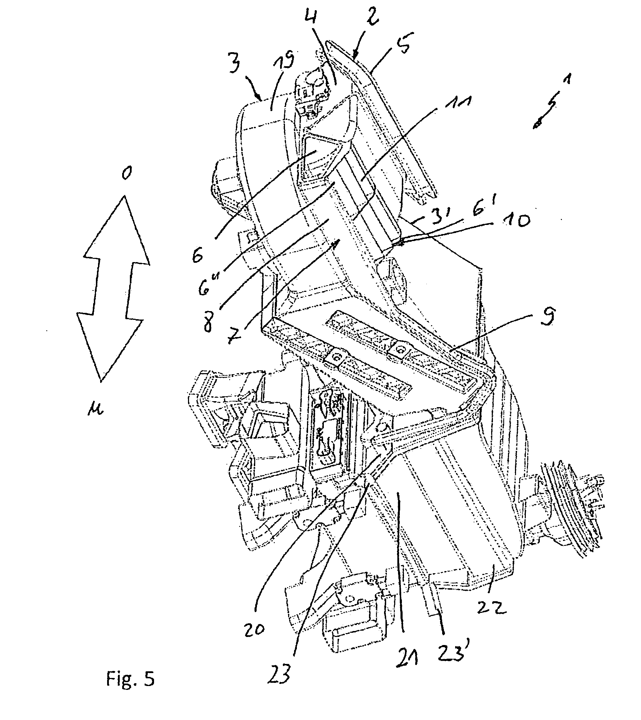

Fig. 5 zeigt eine Klimaanlage 1 gemäß einer Ausführungsform. Durch den Doppelpfeil werden die Richtungen bzw. die Orientierung einer eingebauten Klimaanlage 1 im Motorraum eines Kraftfahrzeugs mit o für oben und u für unten angedeutet. Wie erkennbar ist, ist die erste Wasserabflusseinrichtung 7 derartig in der Klimaanlage eingebaut, dass der wannenartige Wasserauffangabschnitt 8 an dem Ansauggehäuse 4 unterhalb der Umluftöffnungen 6, 6', 6" angeordnet ist und der sich daran anschließende rohrartige Wasserableitabschriitt 9 nach unten erstreckt, um auf einem niedrigeren Niveau als der Wasserauffangabschnitt 8 über ein Verbindungselement 20 mit einem Verteilerkasten 21 über eine Steckverbindung dichtend verbunden zu werden, Die dichtende bzw. wasserdichte Verbindung zwischen dem Verbindungselement 20 der ersten Wasserabflusseinrichtung 7 und dem Verteilerkasten 21 wird, wie bereits ausgeführt, dadurch erzielt, dass die Steckverbindung über einen elastischen Zwischenring, beispielsweise aus Gummi, mit Rückschlagfunktion, welcher z.B. an dem Verteilerkasten bzw. in einer entsprechenden Öffnung (nicht dargestellt) vorgesehen ist, in welchen das Verbindungselement 20 einführbar ist, realisiert wird. Darüber hinaus befindet sich der Anschluss der ersten Wasserabflusseinrichtung 7 an einer Stelle an dem Verteilerkasten 21, welche hinter einem Verdampfer 22 angeordnet ist. Das an dem Ansaugabschnitt 2 abgeschiedene Wasser kann so von dort über ein Gefälle getrennt von dem an dem Gebläse-Filter-Abschnitt 3, 3' abgeschiedenen Wasser, welches in der zweiten Wasserabflusseinrichtung (hier nicht dargestellt) abgeführt wird, bis zu dem Verteilerkasten 21 geleitet werden, wo das Wasser dann über entsprechende Kondenswasserabläufe 23, 23' aus der Klimaanlage 1 abgeführt wird.

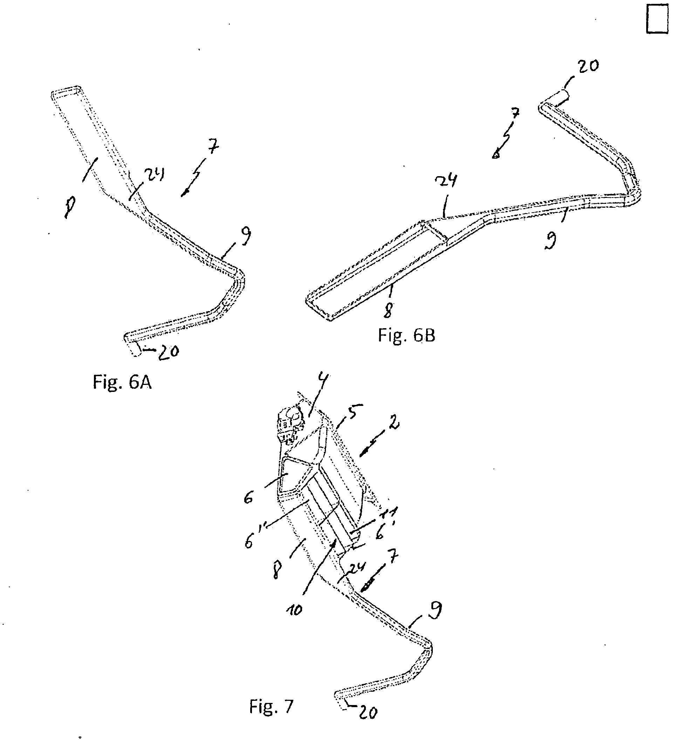

Fig. 6A, 6B zeigen jeweilige perspektivische Ansichten der ersten Wasserabflusseinrichtung 7 gemäß einer Ausführungsform als separates Bauteil mit einem wannenartigen Wasserauffangabschnitt 8, einem rohrartigen Wasserableitabschnitt 9 und einem Verbindungselement 20, welches sich im Wesentlichen in einem rechten Winkel von dem Wasserableitabschnitt 9 erstreckt und in eine entsprechende Öffnung im Verteilerkasten (nicht dargestellt) einsteckbar ist. Auch ist erkennbar, dass der rohrartige Wasserableitabschnitt 9 mehrfach gekrümmt ist. Zwischen dem wannenartigen Wasserauffangabschnitt 8 und dem rohrartigen Wasserableitabschnitt 9 ist darüber hinaus ein im Wesentlichen dreieckig ausgebildeter Übergangsabschnitt 24 vorgesehen. Die erste Wasserabflusseinrichtung 7 ist aus einem transparenten Material hergestellt, so dass die Prüfung einer möglichen Verschmutzung auf einfache Art und Weise durch eine optische Inspektion vorgenommen werden kann.

Fig. 7 zeigt schließlich eine perspektivische Ansicht eines Ansauggehäuses 4 mit daran montierter erster Wasserabflusseinrichtung 7. Die erste Wannenabflusseinrichtung 7 ist dabei mittels einer Clipsverbindung mit dem wannenartigen Wasserauffangabschnitt 8 an dem Ansauggehäuses 4 unterhalb der Umluftöffnungen 6, 6', 6" und unterhalb der Wasserkaskade 10 angebracht.

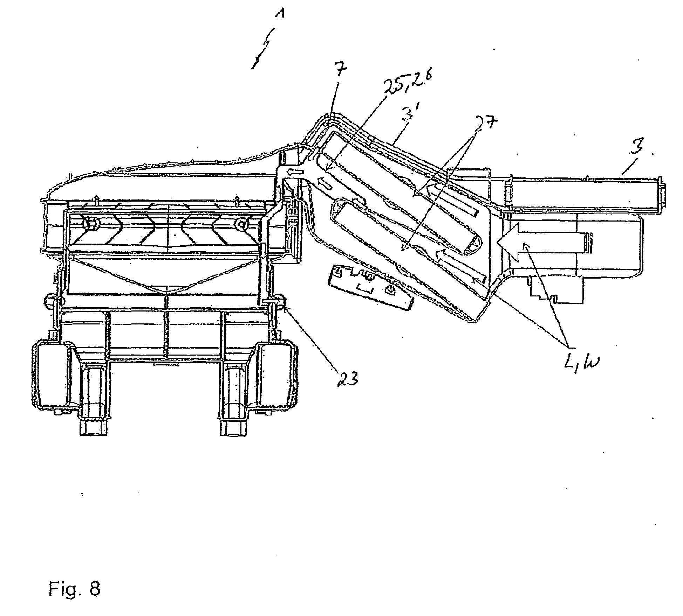

Fig. 8 zeigt eine Draufsicht auf einen Abschnitt einer Klimaanlage 1 im Bereich des Gebläse-Filter-Abschnitts 3, 3' gemäß einer weiteren Ausführungsform. Um eine Wasserabscheidung und Abführung des Wassers aus der Klimaanlage 1 hinter dem Gebläsetrakt 3 zu erreichen, wird gemäß der hier dargestellten Ausführungsform eine erste Wasserabflusseinrichtung 7 in Form eines Trennelements 25 realisiert, welche in dem Filtertrakt 3' vorgesehen ist. Das Trennelement 25 bildet dabei in einer Vertiefung (hier nicht dargestellt) in dem Boden des Gehäuseteils des Filtertrakts 3' zusammen mit der Vertiefung einen geschlossenen Kanal, welcher im Folgenden als Innenabflußkanal 26 bezeichnet wird. Der Innenabflußkanal 26 sammelt sowohl das Wasser W als auch ungefilterete Luft L, welche von dem Gebläsetrakt 3 zu dem Filtertrakt 3' zugeführt werden, und führt diese direkt zu einem Kondenswasserablauf 23 ab und somit aus der Klimaanlage 1 heraus. Der Innenabflußkanal 26 wird in die Klimaanlage 1 bzw. in den Boden des Filtertrakts 3' eingelegt und damit "wasserdicht" in die Klimaanlage 1 integriert. Der Innenabflußkanal 26 kann eine an die Innenhaut der Klimaanlage angepasste Form aufweisen und kann beispielsweise im Spritzgussverfahren hergestellt werden. Gemäß einer weiteren Ausführungsform kann der Innenabflußkanal 26 auch als einfacher Schlauch in die Vertiefung des Gehäuseteils des Filtertrakts 3' montiert sein. Diese Ausführung bietet sich beispielsweise dann an, wenn in dem Filtertrakt 3' nur ein einziger Filter 27 angeordnet ist. In der in Fig. 8 dargestellten Ausführungsform sind in dem Filtertrakt 3' zwei Filter 27 vorgesehen.

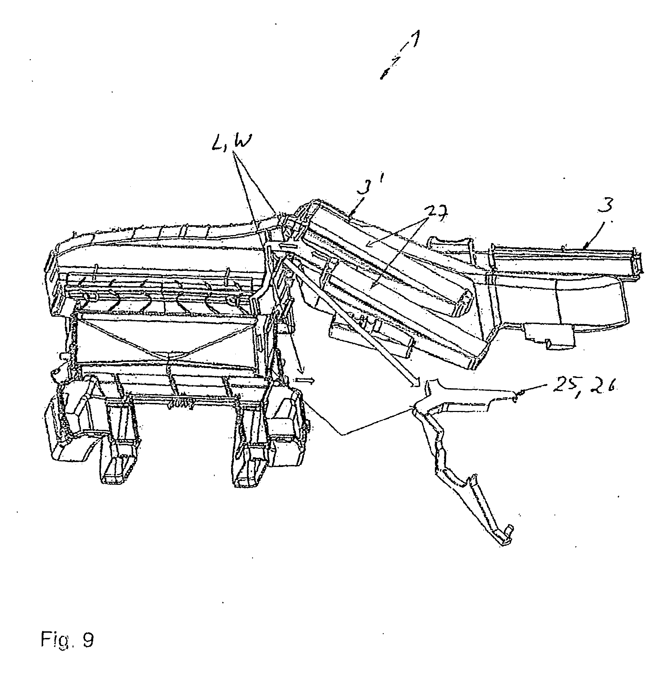

Fig. 9 ist eine weitere perspektivische Ansicht von oben auf den Gebläse-Filter-Abschnitt 3, 3' gemäß der in Fig. 8 dargestellten Ausführungsform. Hierbei ist das Trennelement 25, welches mit der Vertiefung im Boden des Gehäuseteils des Filtertrakts 3' zusammen den Innenablußkanal 26 bildet, in ausgebauter Form separat dargestellt.

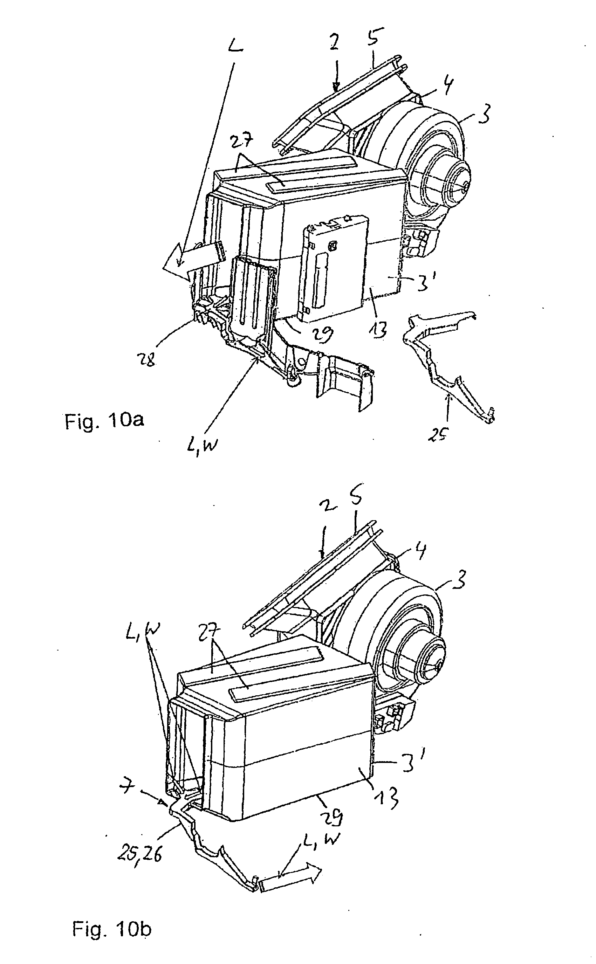

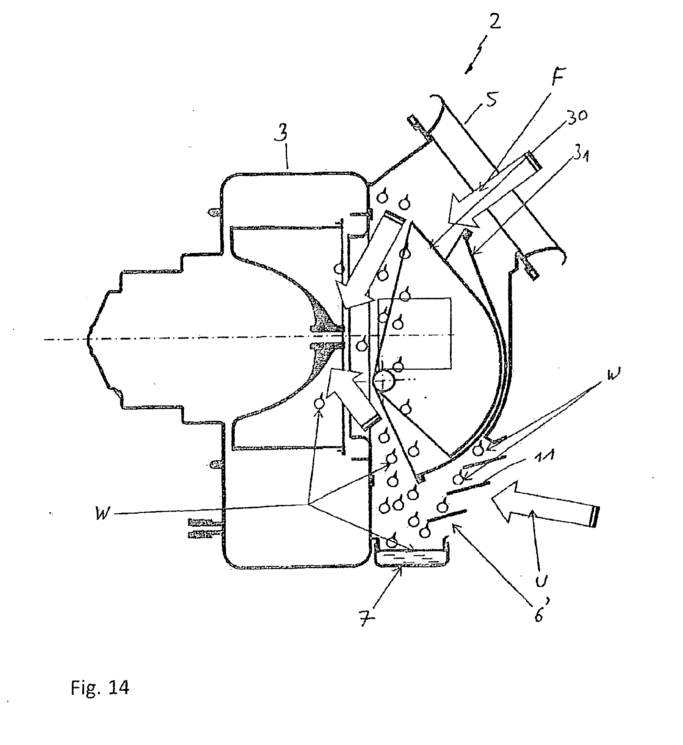

Fig. 10a und 10b zeigen weitere jeweils perspektivische Ansichten der in Fig. 8 dargestellten Ausführungsform. In Fig. 14a ist dabei die Luftströmung der gefilterten Luft, welche aus dem Filtertrakt 3' nach Durchströmen der beiden Filter 27 austritt, durch den durch L gekennzeichneten Pfeil dargestellt. Darüber hinaus ist erkennbar, dass die Vertiefung 28 im Boden 29 des Gehäuses 13 im Bereich des Filtertrakts 3' vorgesehen ist, in welcher ungefilterte Luft und Wasser, angedeutet durch den mit L, W gekennzeichneten Pfeil, gesammelt wird und aus dem Filtertrakt 3' abgeleitet wird. Das Trennelement 25 ist wiederum in demontierter Form dargestellt. In Fig. 10b ist dagegen das Trennelement 25 in montierter Form dargestellt, wobei es zusammen mit der Vertiefung 28 den Innenablaufkanal 26 bildet, durch welchen ungefilterte Luft und Wasser, gekennzeichnet durch den Pfeil L, W, zu einem hier nicht dargestellten Kondenswasserablauf abgeführt werden.

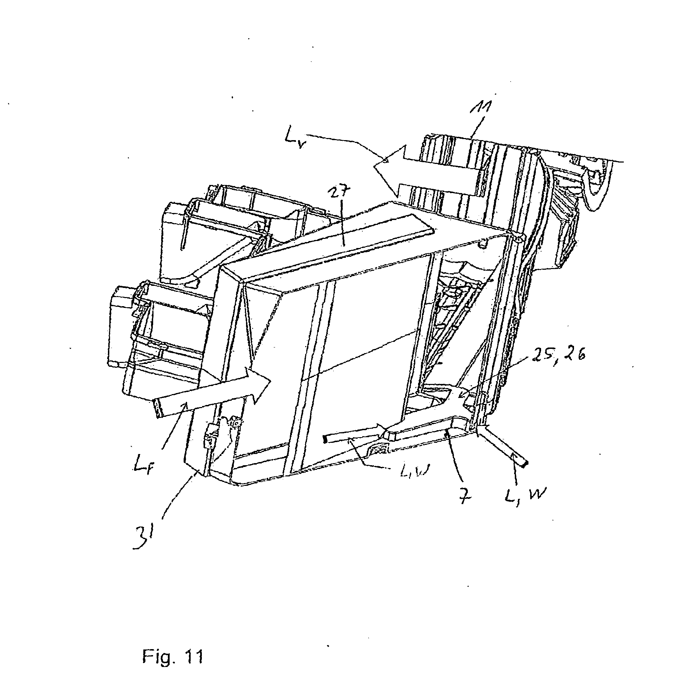

Fig. 11 ist eine schematische Darstellung der Luftführung durch einen Gebläse-Filter-Abschnitt 3, 3' im Bereich des Filtertrakts 3', welcher in dieser Ausführungsform nur mit einem Filter 27 versehen ist. In der Figur sind die Luftrichtung im Filtertrakt 3' durch den Pfeil L_{F} und die Luftrichtung im Verteiler bzw. Verteilerkasten 11 durch den Pfeil L_{V} gekennzeichnet. Wasser und Luft, die durch den Innenablaufkanal 26 zu einem hier nicht dargestellten Kondenwasserablauf geleitet werden, sind wiederum durch die durch L, W gekennzeichneten Pfeile angedeutet.

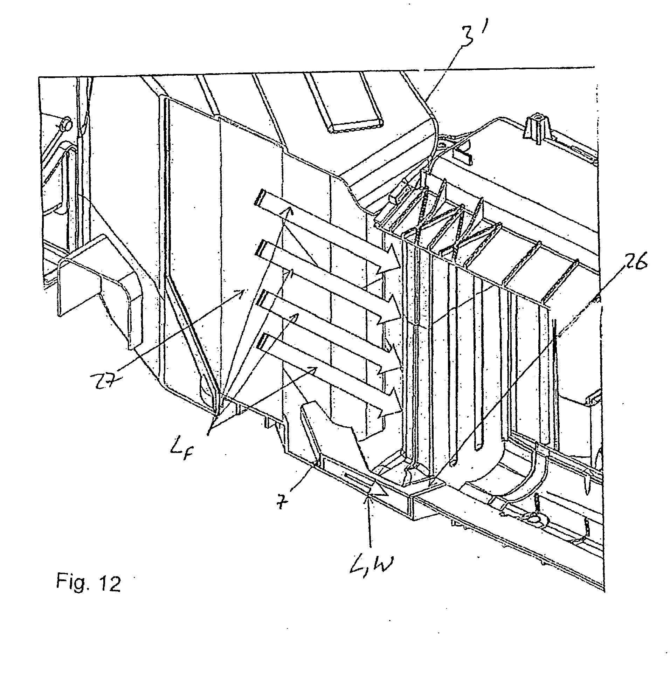

Fig. 12 ist eine weitere schematische Darstellung der Luftführung durch den Filtertrakt 3' des Gebläse-Filter-Abschnitts 3, 3'. Die Luftströmung durch den Filtertrakt 3' ist hier wiederum durch die durch L_{F} gekennzeichneten Pfeile angedeutet und ungefilterte Luft und Wasser, welche durch den Innenabflußkanal 26 aus dem Filtertrakt 3' abgeleitet werden, sind durch den durch L, W gekennzeichneten Pfeil angedeutet.

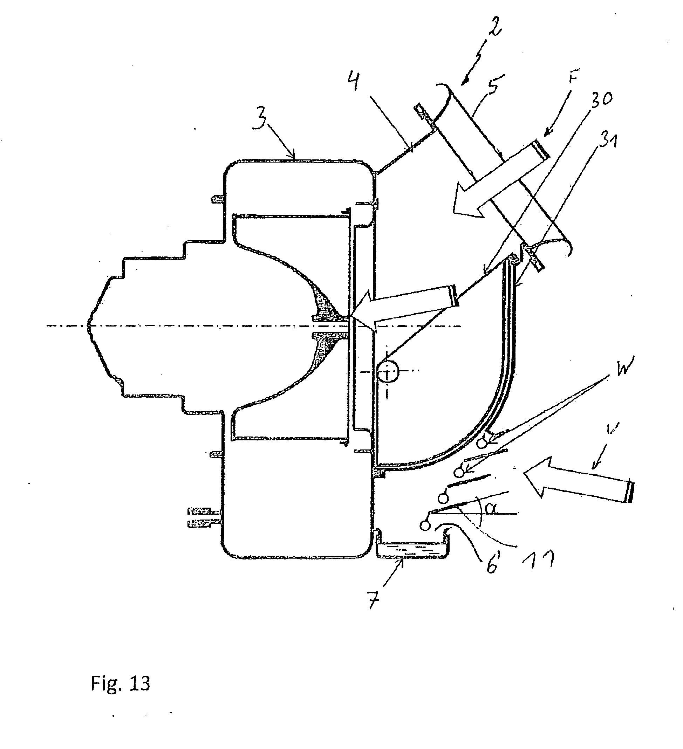

Fig. 13 ist eine seitliche Schnittansicht eines Ansaugabschnitts 2 und eines sich daran anschließende Gebläsetrakts 3 des Gebläse-Filter-Abschnitts 3, 3'. Der Ansaugabschnitt 2 weist eine Frischluftöffnung 5 auf, durch welche Frischluft, deren Strömung durch den durch F gekennzeichneten Pfeil dargestellt ist, angesaugt wird, und eine Umluftöffnung 6', durch welche im Umluftbetrieb der Klimaanlage 1 eine Umluftströmung U eintritt. Weiterhin ist erkennbar, dass im Ansaugabschnitt 2 eine Stauluftklappe 30 und eine Frischluftklappe 31 angeordnet sind. In der in Fig. 13 dargestellten Stellung der Frischluftklappe 31 arbeitet die Klimaanlage 1 im Frischluftbetrieb, wobei lediglich durch die Frischluftöffnung 5 eintretende Frischluft in die Klimaanlage 1 eingeleitet wird und die Umluftöffnung 6' durch die Frischluftklappe 31 verschlossen ist. Wie jedoch in der Figur erkennbar ist, sind in der Umluftöffnung 6' lamellenförmige Elemente 11 in einer Kaskadenform untereinander positioniert angeordnet, welche als Fallrippen für von der Frischluftöffnung 5 durch eine Undichtheit der Klappendichtung kommendes Wasser W wirken. Durch die in Kaskadenform angeordneten lamellenförmigen Elemente 11 wird das leckende Wasser W sicher transportiert und nach unten zu der ersten Wasserabflusseinrichtung, welche in Form einer Wanne unterhalb der Umluftöffnung 6' angeordnet ist, geleitet. Hierdurch wird verhindert, dass das Wasser im Bereich unterhalb der Frischluftöffnung 5 zum Fahrzeuginnenraum austreten kann. Um darüber hinaus in allen Lagen des Kraftfahrzeugs auf der Straße zu gewährleisten, dass die in Kaskadenform angeordneten lamellenförmigen Elemente 11 das Wasser sicher abführen, ist ein Neigungswinkel α, welchen jedes lamellenförmige Element 11 mit der Horizontalen einschließt, größer als 20°.

Fig. 14 ist eine weitere Schnittansicht des in Fig. 13 dargestellten Ansaugabschnitts 2 mit Stauluftregelung. Wie in der Figur erkennbar, befinden sich die Frischluftklappe 30 und die Stauluftklappe 31 in einer Stellung, in der ein Anteil Frischluft F durch die Frischluftöffnung 5 sowie ein Anteil Umluft U durch die Umluftöffnung 6' in die Klimaanlage 1 eintreten. Auch in diesem Modus wird Wasser W, welches aus der Frischluft abgeschieden wird bzw. mit dem Frischluftstrom in den Ansaugabschnitt 2 eingeführt wird, einerseits direkt zu der ersten Wasserabflusseinrichtung 7 geleitet und andererseits wird an der Frischluftklappe 30 leckendes Wasser W durch die lamellenförmigen Elemente 11 aufgefangen und zu der ersten Wasserabflusseinrichtung 7 geleitet.

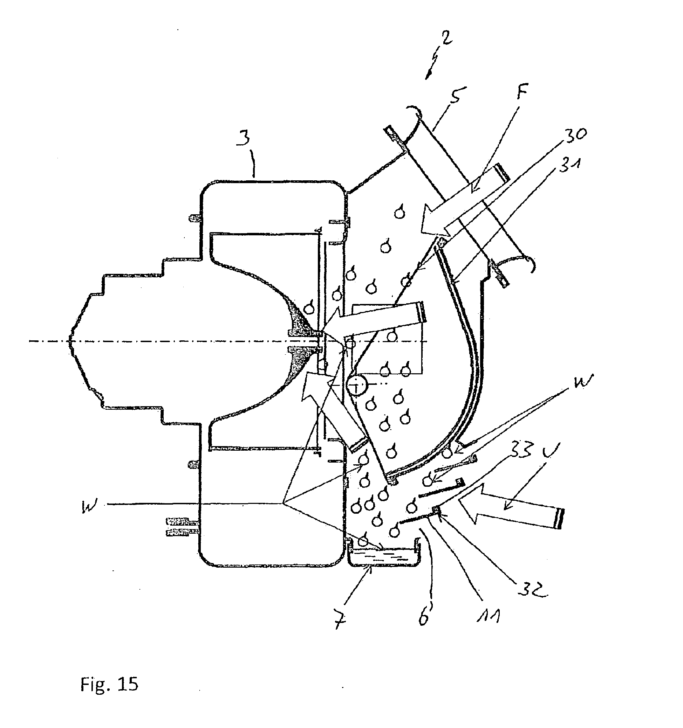

Fig. 15 ist eine Schnittansicht eines Ansaugabschnitts 2 und eines Gebläsetrakts 3 gemäß einer weiteren Ausführungsform, welche sich zu der in Fig. 13 und 14 gezeigten Ausführungsform lediglich durch die Ausbildung der lamellenförmigen Elemente 11 unterscheidet. Die lamellenförmigen Elemente 11 sind wiederum in der Umluftöffnung 6 kaskadenförmig übereinander angeordnet und weisen jeweils einen Neigungswinkel auf, der größer als 20° ist. Jedes der kaskadenförmig angeordneten lamellenförmigen Elemente 11 ist jedoch darüber hinaus an seinem höchsten Punkt, d. h. an einem jeweiligen äußeren Endabschnitt 32 mit einer Wölbung bzw. Erhöhung 33 ausgebildet, wodurch die Wasserabführung zu der ersten Wasserabflusseinrichtung noch weiter verbessert bzw. ein Wasseraustritt im Bereich der Umluftöffnung 6' noch sicherer verhindert wird.

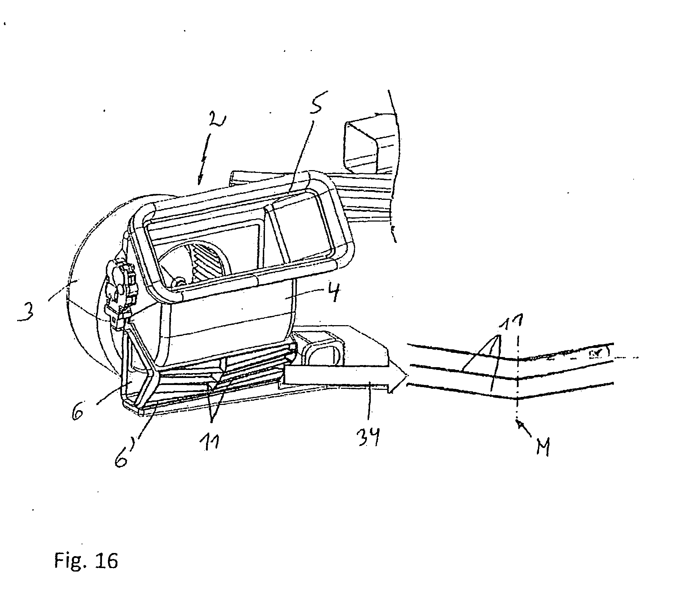

Fig. 16 ist eine perspektivische Ansicht eines Ansaugabschnitts 2 und eines Gebläsetrakts 3 eines Gebläse-Filter-Abschnitts 3, 3' gemäß einer weiteren Ausführungsform. Wie hier erkennbar ist, sind die jeweiligen in der Umluftöffnung 6' kaskadenförmig übereinander angeordneten lamellenförmigen Elemente 11 nicht nur in einem Winkel von größer als 20° hinsichtlich der Horizontalen geneigt, sondern, wie in dem vergrößerten schematischen Ausschnitt, der durch den Pfeil 34 gekennzeichnet ist, verdeutlicht wird, sind auch hinsichtlich der durch die strichpunktierte Linie gekennzeichnete Mittelachse M V-förmig angeordnet, wobei die einzelnen lamellenförmigen Elemente 11 jeweils eine Neigung zur Mittellinie M aufweisen bzw. einen Winkel α von größer 20° aufweisen.

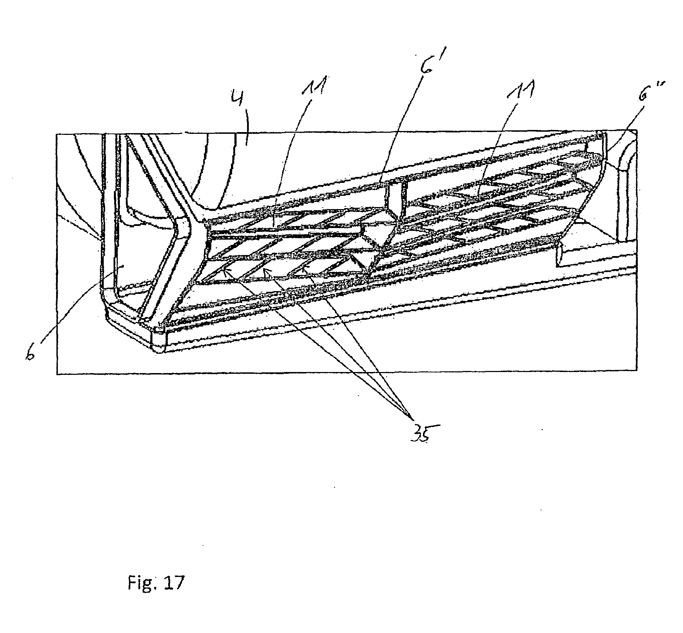

Fig. 17 ist eine Detailansicht der Umluftöffnung 6, 6', 6" mit einer Wasserkaskade gemäß einer weiteren Ausführungsform. Wie in dieser Figur erkennbar ist, sind die einzelnen lamellenförmigen Elemente 11 zusätzlich jeweils mit Vertiefungen in Form von Abflussrinnen 35 ausgebildet, welche das Ableiten des aufgefangenen Wassers W zu der hier nicht dargestellten ersten Wasserabflusseinrichtung noch weiter verbessern. Durch die Abflussrinnen 35 kann das aufgefangene Wasser W vordefiniert geführt werden und gleichzeitig wird hierdurch eine Versteifung der Gesamtkonstruktion erzielt. Zur Verstärkung und Versteifung des Ansauggehäuses 4 können die lamellenförmigen Elemente 11 darüber hinaus auch mit Querrippen in das Ansauggehäuse 4 integriert werden.

Insgesamt betrachtet kann mit der erfindungsgemäßen Klimaanlage 1 auf konstruktiv einfache, jedoch effektive Art und Weise ein getrenntes Wassermanagement des im Ansaugabschnitt 2 und/oder im Gebläse-Filter-Abschnitt 3, 3' abgeschiedenen Wassers realisiert werden.

### Bezugszeichenliste

- 1: Klimaanlage
- 2: Ansaugabschnitt
- 3, 3': Gebläse-Filter-Abschnitt bzw. Gebläsetrakt/Filtertrakt
- 4: Ansauggehäuse
- 5: Frischluftöffnung
- 6, 6', 6": Umluftöffnung
- 7: erste Wasserabflusseinrichtung
- 8: Wasserauffangabschnitt
- 9: Wasserableitabschnitt
- 10: Wasserkaskade
- 11: lamellenförmiges Element
- 12: zweite Wasserabflusseinrichtung
- 13: Gehäuse
- 14: kanalartiger Abschnitt
- 15: Lamelle
- 16: Lüfterrad
- 17: Aufhängung
- 18: Rahmen
- 19: Lüftergehäuse
- 20: Verbindungselement
- 21: Verteilerkasten
- 22: Verdampfer
- 23, 23': Kondenswasserablauf
- 24: Übergangsabschnitt
- 25: Trennelement
- 26: Innenabflusskanal
- 27: Filter
- 28: Vertiefung
- 29: Boden
- 30: Stauluftklappe
- 31: Frischluftklappe
- 32: äußerer Endabschnitt des lamellenförmigen Elements
- 33: Erhöhung
- 34: Pfeil
- M: Mittelachse
- F: Frischtuftströmung
- U: Umluftströmung
- o: oben
- u: unten

## Patentansprüche

1. Klimaanlage (1), insbesondere für ein Kraftfahrzeug, welche einen Gebläse-Filter-Abschnitt (3, 3') mit zumindest einem Gebläsetrakt (3) und einem Filtertrakt (3'), einen Ansaugabschnitt (2) mit einem Ansauggehäuse (4), welches zumindest eine Frischluftöffnung (5) aufweist, durch welches Frischluft (F) angesaugt wird, und einen Verteilerkasten (21) mit zumindest einem Kondenswasserablauf (23, 23') aufweist, wobei im Ansaugabschnitt (2) abgeschiedenes Wasser über eine erste und/oder im Gebläse-Filter-Abschnitt (3, 3') abgeschiedenes Wasser über eine zweite Wasserabflusseinrichtung (7, 12) zu dem zumindest einen Kondenswasserablauf (23, 23') aufweisenden Verteilerkasten (21) ableitbar ist, **dadurch gekennzeichnet, dass** an dem Ansauggehäuse (4) unterhalb der Frischluftöffnung (5), insbesondere in einer Umluftöffnung (6, 6', 6"), eine Wasserkaskade (10) vorgesehen ist, welche aus einer Anordnung aus zumindest einem lamellenförmigen Element (11) besteht.

2. Klimaanlage (1) nach Anspruch 1, **dadurch gekennzeichnet, dass** an dem Ansaugabschnitt (2) die erste Wasserabflusseinrichtung (7) vorgesehen ist, über welche das am Ansaugabschnitt (2) abgeschiedene Wasser zu dem Verteilerkasten (21) ableitbar ist.

3. Klimaanlage (1) nach Anspruch 2, **dadurch gekennzeichnet, dass** die erste Wasserabflusseinrichtung (7) mit einem wannenartigen Wasserauffangabschnitt (8) versehen ist.

4. Klimaanlage (1) nach Anspruch 2 oder 3, **dadurch gekennzeichnet, dass** die erste Wasserabflusseinrichtung (7) mit einem rohrartigen Wasserableitabschnitt (9) versehen ist, welcher mit dem wannenartigen Wasserauffangabschnitt (8) verbunden ist.

5. Klimaanlage (1) nach einem oder mehreren der Ansprüche 2 bis 4, **dadurch gekennzeichnet, dass** die erste Wasserabflusseinrichtung (7) einstückig hergestellt ist.

6. Klimaanlage (1) nach einem oder mehreren der Ansprüche 2 bis 5, **dadurch gekennzeichnet, dass** die erste Wasserabflusseinrichtung (7) als Blasteil im Blasverfahren hergestellt ist.

7. Klimaanlage (1) nach einem oder mehreren der Ansprüche 4 bis 6, **dadurch gekennzeichnet, dass** an einem Ende des Wasserableitabschnitts (9) ein Verbindungselement (20) vorgesehen ist.

8. Klimaanlage (1) nach Anspruch 7, **dadurch gekennzeichnet, dass** das Verbindungselement (20) und der Verteilerkasten (21) über eine Steckverbindung miteinander dichtend verbindbar sind.

9. Klimaanlage (1) nach Anspruch 7 oder 8, **dadurch gekennzeichnet, dass** an dem Verteilerkasten (21) ein elastisches Ringelement vorgesehen ist, in welches das Verbindungselement (20) einsteckbar ist.

10. Klimaanlage (1) nach Anspruch 9, **dadurch gekennzeichnet, dass** das elastische Ringelement als Zwischenring ausgebildet Ist, welcher aus EPDM oder Gummi hergestellt ist.

11. Klimaanlage (1) nach Anspruch 9 oder 10, **dadurch gekennzeichnet, dass** das elastische Ringelement eine Rückschlagventilfunktion aufweist.

12. Klimaanlage (1) nach einem oder mehreren der Ansprüche 2 bis 11, **dadurch gekennzeichnet, dass** die erste Wasserableiteinrichtung (7) in zumindest einem Abschnitt aus einem transparenten Material hergestellt ist.

13. Klimaanlage (1) nach einem oder mehreren der Ansprüche 1 bis 12, **dadurch gekennzeichnet, dass** in dem Filtertrakt (3') des Gebläse-Filter-Abschnitts (3, 3') ein Trennelement (25) vorgesehen, welches zusammen mit einer Vertiefung (28) im Boden (29) eines Gehäuseteils des Filtertrakts (3') einen Innenabflußkanal (26) zum Abführen von Wasser und ungefilterter Luft aus dem Filtertrakt (3') zu dem Kondenswasserablauf (23, 23') bildet.

## Claims

1. An air conditioning device (1), in particular for a motor vehicle, comprising a fan-filter section (3, 3') having at least one fan tract (3) and one filter tract (3'), an intake section (2) having an intake housing (4), which has at least one fresh air opening (5) through which fresh air (F) is taken in, and a distributor box (21) having at least one condensation water drain (23, 23'), wherein water that is separated in the intake section (2) can be discharged via a first and/or water that is separated in the fan-filter section (3, 3') can be discharged via a second water discharge device (7, 12) to the distribution box (21) comprising at least one condensation water drain (23, 23'), **characterized in that** a water cascade (10) is provided on the intake housing (4) below the fresh air opening (5), in particular in a circulating air opening (6, 6', 6"), the water cascade being formed of an arrangement of at least one louver-shaped element (11).

2. The air conditioning device (1) according to claim 1, **characterized in that** the first water discharge device (7) is provided on the intake section (2) and can be used to discharge the water that is separated on the intake section (2) to the distribution box (21).

3. The air conditioning device (1) according to claim 2, **characterized in that** the first water discharge device (7) is provided with a pan-like water collection section

4. The air conditioning device (1) according to claim 2 or 3, **characterized in that** the first water discharge device (7) is provided with a tubular water discharge section (9), which is connected to the pan-like water collection section (8).

5. An air conditioning device (1) according to one or more of claims 2 to 4, **characterized in that** the first water discharge device (7) is produced as one piece.

6. An air conditioning device (1) according to one or more of claims 2 to 5, **characterized in that** the first water discharge device (7) is produced as a blow-molded part using a blow-molding method.

7. An air conditioning device (1) according to one or more of claims 4 to 6, **characterized in that** a connecting element (20) is provided at one end of the water discharge section (9).

8. The air conditioning device (1) according to claims 7, **characterized in that** the connecting element (20) and the distribution box (21) can be sealingly connected to each other by way of a plug confection.

9. The air conditioning device (1) according to claim 7 or 8, **characterized in that** an elastic ring element, into which the connecting element (20) can be plugged, is provided on the distribution box (21).

10. The air conditioning device (1) according to claim 9, **characterized in that** the elastic ring element is designed as an intermediate ring which is produced from EPDM or rubber.

11. The air conditioning device (1) according to claim 9 or 10, **characterized in that** the elastic ring element has a check valve function.

12. An air conditioning device (1) according to one or more of claims 2 to 11, **characterized in that** the first water discharge device (7) is produced from a transparent maternal in at least one section.

13. An air conditioning device (1) according to one or more of claims 1 to 12, **characterized in that** a separating element (25) is provided in the filter tract (3') of the fan-filter section (3, 3'), the separating element, together with a depression (28) in the bottom (29) of a housing part of the filter tract (3') forming an inner discharge duct (26) for removing water and unfiltered air from the filter tract (3') to the condensation water drain (23, 23').

## Revendications

1. Système de climatisation (1), en particulier pour un véhicule automobile, qui présente une partie pulseur-filtre (3, 3') comportant au moins un système de pulseur (3) et un système de filtre (3'), une partie aspiration (2) comportant un carter d'aspiration (4) qui présente au moins une ouverture d'air frais (5), carter d'aspiration par lequel de l'air frais (F) est aspiré, et présente une boîte de distribution (21) comportant au moins une évacuation d'eau de condensation (23, 23'), où de l'eau déposée dans la partie aspiration (2) peut être évacuée par un premier dispositif d'écoulement d'eau (7, 12) et/ou de l'eau déposée dans la partie pulseur-filtre (3, 3') peut être évacuée par un deuxième dispositif d'écoulement d'eau, jusqu'à la boîte de distribution (21) présentant au moins une évacuation d'eau de condensation (23, 23'),
**caractérisé en ce qu'**il est prévu, au niveau du carter d'aspiration (4), au-dessous de l'ouverture d'air frais (5), en particulier dans une ouverture d'air recyclé (6, 6', 6"), une cascade d'eau (10) qui se compose d'un agencement d'au moins un élément (11) en forme de lamelles.

2. Système de climatisation (1) selon la revendication 1, **caractérisé en ce qu'**il est prévu, au niveau de la partie aspiration (2), le premier dispositif d'écoulement d'eau (7) par lequel peut être évacuée, jusqu'à la boîte de distribution (21), l'eau déposée au niveau de la partie aspiration (2).

3. Système de climatisation (1) selon la revendication 2, **caractérisé en ce que** le premier dispositif d'écoulement d'eau (7) est doté d'une partie collectrice d'eau (8) en forme de cuve.

4. Système de climatisation (1) selon la revendication 2 ou 3, **caractérisé en ce que** le premier dispositif d'écoulement d'eau (7) est doté d'une partie évacuation d'eau (9), de forme tubulaire, qui est raccordée à la partie collectrice d'eau (8) en forme de cuve.

5. Système de climatisation (1) selon l'une quelconque ou plusieurs des revendications 2 à 4, **caractérisé en ce que** le premier dispositif d'écoulement d'eau (7) est fabriqué de façon monobloc.

6. Système de climatisation (1) selon l'une quelconque ou plusieurs des revendications 2 à 5, **caractérisé en ce que** le premier dispositif d'écoulement d'eau (7) est fabriqué, dans le procécé de soufflage, comme une pièce de soufflage.

7. Système de climatisation (1) selon l'une quelconque ou plusieurs des revendications 4 à 6, **caractérisé en ce qu'**il est prévu un élément d'assemblage (20) au niveau d'une extrémité de la partie évacuation d'eau (9).

8. Système de climatisation (1) selon la revendication 7, **caractérisé en ce que** l'élément d'assemblage (20) et la boîte de distribution (21) peuvent être combinés l'un avec l'autre, de façon étanche, par un assemblage par emboîtement.

9. Système de climatisation (1) selon la revendication 7 ou 8, **caractérisé en ce qu'**il est prévu, sur la boîte de distribution (21), un élément annulaire élastique dans lequel peut être emboîté l'élément d'assemblage (20).

10. Système de climatisation (1) selon la revendication 9, **caractérisé en ce que** l'élément annulaire élastique est conçu comme une bague intermédiaire qui est fabriquée en élastomère de type EPDM ou bien en caoutchouc.

11. Système de climatisation (1) selon la revendication 9 ou 10, **caractérisé en ce que** l'élément annulaire élastique présente une fonction de clapet antiretour.

12. Système de climatisation (1) selon l'une quelconque ou plusieurs des revendications 2 à 11, **caractérisé en ce que** le premier dispositif d'écoulement d'eau (7) est fabriqué, dans au moins une partie, dans une matière transparente.

13. Système de climatisation (1) selon l'une quelconque ou plusieurs des revendications 1 à 12, **caractérisé en ce qu'**il est prévu, dans le système de filtre (3') de la partie pulseur - filtre (3, 3'), un élément de séparation (25) qui, avec une cavité (28) formée dans le fond (29) d'une partie logement du système de filtre (3'), forme un conduit d'écoulement intérieur (26) servant à l'évacuation d'eau et d'air non filtré provenant du système de filtre (3'), jusqu'à l'évacuation d'eau de condensation (23, 23').
